# EUROPEAN PATENT SPECIFICATION

(11) **EP 4 638 674 B1**
(45) Date of publication and mention of the grant of the patent: **19.08.2026**
(21) Application number: 23833358.7
(22) Date of filing: 14.12.2023
(51) Int. Cl.: C11C 3/00, C11C 3/02

(54) **COST AND ENERGY EFFICIENT BIODIESEL PRODUCTION FROM NATURAL OR INDUSTRIAL WASTE OIL WITH LOW CO2 FOOTPRINT**
KOSTEN- UND ENERGIEEFFIZIENTE BIODIESELHERSTELLUNG AUS NATÜRLICHEM ODER INDUSTRIELLEM ALTÖL MIT NIEDRIGEM CO2-FUSSABDRUCK
PRODUCTION ÉCONOMIQUE ET ÉCONOME EN ÉNERGIE DE BIODIESEL À PARTIR D'HUILE RÉSIDUAIRE NATURELLE OU INDUSTRIELLE À FAIBLE EMPREINTE CO2

(30) Priority: 19.12.2022 EP 22214484
(43) Date of publication of application: 29.10.2025
(73) Proprietor: BASF SE, 67056 Ludwigshafen am Rhein (DE)
(72) Inventor: KLINGELHOEFER, Paul, 67056 Ludwigshafen am Rhein (DE); SCHIER, Michael, 67056 Ludwigshafen am Rhein (DE)
(74) Representative: BASF IP Association
(86) International application number: PCT/EP2023/085869
(87) International publication number: WO 2024/132853

(56) References cited:
- WO-A1-2020/074435
- WO-A1-2021/204610
- US-A1- 2005 075 509
- US-A1- 2012 073 187
- ADEEB HAYYAN ET AL: "Treatment of acidic palm oil for fatty acid methyl esters production", CHEMICAL PAPERS, SP VERSITA, HEIDELBERG, vol. 66, no. 1, 24 October 2011 (2011-10-24), pages 39 - 46, XP019977654, ISSN: 1336-9075, DOI: 10.2478/S11696-011-0102-6

## Description

The present invention relates to a method of producing fatty acid alkyl esters from an organic oil source.

Biodiesel produced from waste oil is getting more and more attractive as there is no food vs. fuel problem and the waste oil has a significantly lower price compared to vegetable oil, which is the dominating feedstock for biodiesel.

WO 2020/074 435 A1 describes the reaction of methane-sulfonic acid (MMA) with an oil source and glycerol followed by a transesterification step in a preferred alkaline medium. In more detail, a method of producing fatty acid alkyl ester from an organic oil source containing at least one free fatty acid is described, wherein the oil source has an acid number of at least 30 mg KOH/g oil source. The method comprises a step a) of reacting the oil source with glycerol at a temperature, which does not exceed 180°C during the reaction, in the presence of a catalyst comprising at least one alkyl or aryl sulfonic acid or a homoanhydride thereof. Step b) represents the transesterification of the reaction product from step a) with an alkanol followed by isolating the fatty acid alkyl ester from the reaction product of step b).

WO 2021/204610 A1 describes a method of producing fatty acid alkyl ester from an organic oil source containing at least one free fatty acid, wherein the vegetable and/or animal waste oil has an acid number of at least 30 mg KOH/g. The method comprises the step of a) reacting the oil source with glycerol at a temperature, which is at least 110°C and does not exceed 180°C during the reaction, in the presence of a catalyst comprising at least methane sulfonic acid or the homo anhydride thereof. In step b) follows the acidic transesterification at a temperature, which is at least 110°C and does not exceed 160°C during the reaction of the reaction product from step a) with an alkanol. Finally, the fatty acid alkyl ester is isolated from the reaction product of step b).

However, there is a need for even more energy efficient processes that combine the steps of glycerol esterification and transesterification in order to provide cost and energy efficient biodiesel production from natural or industrial waste oil with low a CO₂ footprint. In this regard, the present invention modifies an acidic glycerolysis followed by an acidic pressurized transesterification process as disclosed in WO 2021/204610 A1, especially to be more time and cost efficient.

Accordingly, an object of the present invention is to provide such a process, which is a cost and energy efficient process for biodiesel production from waste oil by re-using at least partially a MSA containing catalyst.

The object is achieved by a method of producing fatty acid alkyl ester (FAAE) from an organic oil source containing at least one free fatty acid (FFA), wherein the vegetable and/or animal waste oil has an acid number of at least 30 mg KOH/g and wherein the method comprises the steps of
a) reacting the oil source with glycerol at a temperature, which is at least 110°C and does not exceed 180°C during the reaction, in the presence of a catalyst comprising at least methane sulfonic acid or the homo anhydride thereof; and
b) acidic transesterification at a temperature, which is at least 110°C and does not exceed 160°C during the reaction of the reaction product from step a) with an alkanol, wherein the reaction product from step a) comprises the at least one free fatty acid reacted with glycerol, glycerol and the catalyst; and
c) isolating the fatty acid alkyl ester from the reaction product from step b), wherein the reaction product from step b) comprises the fatty acid alkyl ester, glycerol, the catalyst and the alkanol.
d) isolating a mixture of glycerol and catalyst from the reaction product after step c);
e) repeating steps a) to c) provided that at least part of the glycerol and the catalyst used in step a) results from the mixture of step d).

It was surprisingly found that the acidic catalyst comprising at least methane sulfonic acid or the homo anhydride thereof together with the glycerol can be at least one time re-used without having a negative impact on the yield and quality of the glycerolysis process, especially on a crucial phase separation in step d). The process can be repeated not only once, but several times depending on the feed oil quality.

Because of the partial re-use it is suitable to increase the percentage of the catalyst methane sulfonic acid MSA (or anhydride) to get a high yield of >90% FAME. As methane sulfonic acid (or anhydride) also contributes to the greenhouse gases of the process a partial re-use will reduce the CO₂ footprint and improves the green-house gas savings.

As MSA is partially soluble in a fatty acid alkyl ester phase, it is recommended that the ester is neutralized before distillation to avoid any problems with corrosion and sulfur content.

Thus, in a preferred embodiment the isolation in step c) includes a phase separation step, wherein a first phase is obtained comprising the fatty acid alkyl ester, wherein the first phase is preferably either neutralized or washed with water to remove the residual catalyst.

The distribution of MSA between the first phase (ester phase) and the second phase (glycerol/alkanol phase) is approximately 0.04:1, if methanol is used as alkanol so that the biodiesel product is fatty acid methyl ester (FAME).

Advantageously, the equilibrium regarding the reacting of FFA containing oil with glycerol is shifted to the product side by water removal.

Step a) can be preceded by a filtration step to remove solid parts from the oil source. Also, a degumming step can be preceded.

Preferably, step a) is carried under reduced pressure.

Preferably, step b) is carried out under elevated pressure. Suitable pressure is from 1.1 bar to 15 bar, preferably, from 4 bar to 10 bar (abs.).

Preferably after step b) and before step c) a step b') of removing at least partly the alkanol by using the reaction temperature, especially by lowering the pressure, preferably to atmospheric pressure, is introduced.

Preferably, the alkanol, which is at least partly removed can be recycled by feeding to step b) of the process of the invention.

To improve on the kinetics of step a) and/or step b) the esterification and transesterification can be done as an emulsion e.g. by made ultrasonic cavitation. Step a) and b) can be done in the same reactor, preferably at similar temperatures, i.e. in the same temperature range, especially from 110°C to 160°C, preferably 120°C to 160°C. Preferably, the difference of the temperature in step a) and step b) differs in at most 40°C, more preferably at most 20°C and the temperature in step a) is higher than the temperature in step b).

Preferably, the isolating in step c) includes a phase separation. Preferably, in step c) the phase separation is done without a previous neutralization step. The fatty acid alkyl ester phase is preferably neutralized separately before being purified by distillation.

Useful for neutralization are alkali metal or alkaline earth metal compounds in the form of the oxides, hydroxides, hydrides, carbonates, acetates or alkoxides of the alkanol, preferably sodium hydroxide, potassium hydroxide, or sodium and potassium alkoxides of the short-chain monohydric alcohols having 1 to 5 carbon atoms. The alkaline earth metal compounds are preferably sodium or potassium.

It was surprisingly found that the at least partial re-use of the none-neutralized glycerol from step c) has no negative effect on the efficiency of the process and is therefore a cost saving measure and does reduce the CO₂ footprint and the greenhouse gas savings of the process.

Methane sulfonic acid as catalyst is advantageous compared to sulfuric acid as common acidic catalyst since no or decreased tendency of decomposition of glycerol or the glycerol esters can be observed due to oxidation, water elimination, addition to any double bond and sulfatation.

The process can be carried out throughout a broad range of oil qualities and different organic oil sources having a content of free fatty acid of at least 15 % by weight, which relates to an acid number of about 30 mg KOH/g oil source.

The starting material in the process of producing fatty acid alkyl esters (FAAE's) is an organic oil source.

Organic oil is produced in contrast to mineral oil by plants, animals and other organisms through natural metabolic processes and is glyceride based. The term "organic oil source" is to be understood to include organic oil, like vegetable oil and animal oil, especially vegetable oil, but also any other mixture, by-product or fraction of organic oil that contains at least one FFA and is suitable to produce biodiesel according to the method of producing FAAE according to the present invention. The term "organic oil source" also includes fats, which are solid at room temperature, but liquid at the reaction temperature in step a) of the method of producing FAAE according to the present invention.

Organic oil sources typically contain different types of free fatty acids in different amounts as well as fatty acid bound as tri-, di- and monoglycerides. Only very low amounts -if any- of other organic acids can be included so that in industry the acid number measurement is used to quantify the amount of all free fatty acids contained in the organic oil source. Measurement can be carried out in analogy of the standard method DIN EN 14104 (2003-10).

The method of the present invention is suitable for organic oil sources with an acid number of at least 30 mg KOH/g oil source. Preferably, the oil source has an acid number of at least 40 mg KOH/g oil source, more preferably at least 60 mg KOH/g oil source, even more preferably at least 80 mg KOH/g oil source, even more preferably at least 100 mg KOH/g oil source, even more preferably at least 120 mg KOH/g oil source, even more preferably at least 140 mg KOH/g oil source, even more preferably at least 150 mg KOH/g oil source.

Organic oil sources include vegetable and animal oils and fats. Vegetable oils are generally obtained by extraction from seeds, by means of solvent or pressure, while animal fats are obtained by hot extraction in autoclaves or by means of solvent. Normally these fatty substances contain free fatty acids, sterols, phospholipids, water, odorous substances and other impurities. Refining of the fatty substances involves complete removal of nearly all the impurities including the free fatty acids so that they can be used in the production of biodiesel, in food and in industry in general.

Refined vegetable and animal oils and fats typically show very low FFA content. However during use of these refined oils and fats the FFA content can increase.

Used oils typically show high amounts of free fatty acid and thus also have high acid numbers. Thus, in a preferred embodiment of the present invention the organic oil source is from used vegetable and/or animal oil and/or fat, like used cooking oil. Used oil is also called waste oil, so that waste oil, especially waste vegetable oil, is preferred.

Other organic oil sources include by-products of the chemical and physical refining of vegetable and/or animal oil and/or fat, by-products of the refining of glycerol from biodiesel, fatty acids from distillation and non-distillation, hydrolytically cleaved fatty substances, trap grease and distilled and non-distilled fatty acids resulting from the cleaving of soaps.

Also, mixtures of the above organic oil sources are encompassed.

Preferably, the organic oil source is from used vegetable oil or by-products of the chemical and physical refining of vegetable oil. The vegetable oil is preferably an oil or oil mixture selected from the group of oils consisting of coconut oil, corn oil, cottonseed oil, olive oil, palm oil, peanut oil, rapeseed oil, safflower oil, sesame oil, soybean oil and sunflower oil, preferably the vegetable oil comprises rapeseed oil, even more preferably the vegetable oil is palm oil.

More preferably, the organic oil source is palm fatty acid distillate (PFAD) or palm sludge oil (PSO). PAFD is a lower-value by-product generated during the refining of palm oil in the fatty acid stripping and deodorization stages. PFAD is generally sold as a source of industrial fatty acids for non-food applications.

Even more preferably, the organic oil source is palm sludge oil (PSO). It is an un-distilled residue of palm oil production with inferior quality compared to PFAD.

The organic oil source may be purified before used in step a) of the method for producing FAAE. An optional purification step is the removal of metal ions, e.g. be using complexation agents (chelate formation). Also washing steps may be used before step a). Suitable washing steps include water and acidic washing. This may be used to remove inorganic acids or the like.

Preferably, the at least one free fatty acid is a fatty acid or a mixture of fatty acids selected from the group of fatty acids consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linolelaidic acid, alpha-linoleic acid, arachidonic acid, eicosapentaenoic acid, erucic acid and docosahexaenoic acid, preferably the at least one free fatty acid comprises or consists of oleic oil and/or palmitic oil. Accordingly, the term "at least one fatty acid" is to be understood in that the at least one fatty acid is specific fatty acid or a mixture of two, three or more fatty acids (mixture of fatty acids).

These fatty acids are converted into alkyl esters to yield FAAE's as biodiesel. However, the most preferred alkyl ester is the methyl ester so that fatty acid methyl esters (FAME's) are preferred. Preferably, the biodiesel obtained by the method of producing FAME according to the present invention fulfills the requirements of DIN EN 14214 (2014-06).

The free fatty acids are converted into alkyl esters to yield FAAE's as biodiesel. However, the most preferred alkyl ester is the methyl ester so that fatty acid methyl esters (FAME's) are preferred. Accordingly, a preferred alkanol is methanol.

Preferably, the reaction time in step a) can be reduced by making an emulsion so that the reaction surface of the two-phase system is greatly enhanced.

Since in step a) also water is a reaction product suitable measures should be taken to reduce the water formed by the reaction. Preferably, the reaction in step a) is carried out under reduced pressure (relative to atmospheric pressure). More preferably, the pressure is below 1000 hPa, more preferably 900 hPa or lower, even more preferably 800 hPa or lower, even more preferably, 700 hPa or lower, even more preferably, 600 hPa or lower, even more preferably 500 hPa or lower, even more preferably 400 hPa or lower, even more preferably 300 hPa or lower, even more preferably 200 hPa or lower, even more preferably 100 hPa or lower.

Preferably, during the reaction in step a) the temperature does not exceed 170°C, more preferably does not exceed 160°C, even more preferably the temperature does not exceed 150°C. Preferably, in step a) the temperature is at least 110°C, more preferably at least 120°C, even more preferably at least 130°C. Accordingly preferred temperature ranges are from 110°C to 180°C, more preferably the temperature is from 110°C to 170°C, even more preferably from 120°C to 160°C and even more preferably from 130°C to 150°C. A preferred temperature is 140°C.

Preferably, during the reaction in step b) the temperature does not exceed 160°C, more preferably does not exceed 150°C. Preferably, in step b) the temperature is at least 110°C, more preferably at least 120°C.

Preferably, in step a) the initial molar ratio of glycerol to free fatty acid calculated based on the acid number of the oil is from 1:3 to 1:1.5, more preferably from 1:2.7 to 1:8.

Preferably, in step a), step b) or step a) and step b) the amount of methane sulfonic acid or anhydride thereof is from 0.5 to 2 weight-%, even more preferably from 1 to 1.5 weight-% based on the total amount of the oil source.

In step b) a transesterification is carried out with an alkanol, preferably methanol to yield FAME. As the acid catalyst is already present no further catalyst addition is needed.

Excess of methanol can be separated and recycled for step b) of the method of producing FAAE according to the present invention.

In step c) the reaction product (biodiesel) is isolated, preferably by phase separation. An advantage of the process is the excellent phase separation with all waste oil source and FFA content as with the addition of glycerol there is always a significant density difference of the two phases and no phase inversion can happen. The progress of phase separation can be monitored by viscosity and/or conductivity measurement.

The biodiesel (FAAE) phase is preferably neutralized and purified by distillation under reduces pressure.

The recovered acidic glycerol after the distillation of the alkanol is used at least partially for a next production cycle.

Accordingly, the method of the present invention comprises as a step d) the isolation of a mixture of glycerol and catalyst from the reaction product after step c), i.e. after the FAAE is isolated. Preferably, in step d) the mixture of glycerol and catalyst is isolated from the reaction product after step c) by distillation. Surprisingly the obtained mixture can be re-used in the process without further purification.

Typically, the distillation is carried out as fractional distillation with the alkanol as earlier fraction, followed by the mixture of glycerol and catalyst (MSA).

Preferably, in step d) the alkanol is at least partly recycled by distillation.

In order to recycle the mixture, a) step e) follows, wherein steps a) to c) are repeated, provided that at least a part of the mixture are re-used in step a).

The mixture comprising MSA and glycerol can be recycled as described but can also be re-used twice or three times.

Accordingly, in a preferred embodiment step e) is followed by a further step of isolating a mixture of glycerol and catalyst from the reaction product after step c) in order to repeat step e) again.

In a preferred embodiment, between step a) and step b) no phase separation is carried out. It is also preferred when step a) and step b) are carried out in the same reactor vessel.

### Examples

### Analytical details:

### Waste oil characterization:

dark brown/black low viscos liquor at rt containing low amounts of sludge sediment
- Acid number in mg KOH/g: 116
- Calculated Free Fatty Acid (FFA) content (%): 58
- Iodine number (mgKOH/g): 46
- Water content after filtration (%): 1
- S-content (ppm): 193
- P-content (ppm): 309
- Soaps content (ppm): 106

### Pre-a) step:

### 1. Step: Filtration

Waste oil was filtered two times at room temperature via paper filter (1.6-2 µm). Residue: appr. <1wt%

Water content after filtration: 0.5%

### Experimental 1:

Molar ratio Glycerol:FFA = 1:1.8
Appr. 1.5% MSA (as active substance based on waste oil)

### 1a. Step: (pre-a step and step a))

### (First) Acidic degumming and esterification

504.68g filtered waste oil, 5.1g water, and 10.8g Lutropur MSA (methane sulfonic acid, 70% active content) were mixed in a reaction vessel, heated up to 100°C and stirred for 2 h. Then 53.9g glycerol were added, and the mixture was heated up to 140°C. The reaction started when the temperature is constant under vacuum, which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx: 4 g). The sample is washed with ca. 4g glycerol to eliminate MSA from the mixture. Glycerol and oil phase are separated. From the oil phase the acid number is measured according to DIN EN 14104. | | | | | | |
|---|---|---|---|---|---|---|
| | 0 h | 0.5 h | 1.0 h | 2.0 h | 3.0 h | 4.0 h |
| mgKOH/g | 40.8 | 14.4 | 12.1 | 13,.5 | 12.7 | 12.6 |

After reaction 518.84g reaction product was obtained from step 1a. Further 12.0g distillate and 7.84g material in the cooling trap (mainly water) were obtained.

### 2a. Step: (step b))

### (First) Acidic transesterification

490.7g reaction product from a) and 147.21g methanol (30 wt% related to oil) were filled in a pressure reactor and heated up to 127°C and stirred. Reaction pressure was 5.5* 100 kPa. Reaction time was 4h. After 4h reactor was cooled down to <40°C.

### 3a. Step (step c)

### Phase separation

585.78g reaction product was filled in a separating funnel. Phase separation in a separating funnel is difficult as there is no visual difference in the phase (all black). Separation finish was judged by change of viscosity und measurement of conductivity.

### Analytical results:

Lower phase (glycerol/methanol/MSA phase) was 108.0g.

The conductivity of the lower phase was 5.03 mS/cm

### Upper phase (fatty acid methyl ester) was 472.23 g.

### Analytics:

FAME: 90%
Mono-, Di and Triglycerides: 5%

The conductivity of the oil phase was 114.2 µS/cm.

### 4a. Step (step e)

### Distillation

106.8 g lower phase (product temperature MeOH 65°C), Distillation at approx. 3 hPa and temperature of approx. 130°C.

3.4g primary low boiling product (MeOH) was separated.

77.4g higher boiling point product (Glycerol/MSA) was separated.

### Re-use of MSA/Glycerol (step f)

### 1b. Step

### (Second) Acidic degumming and esterification

600.9g filtered waste oil and 6.1g water were mixed in a reaction vessel, heated up to 100°C and stirred for 2 h. Then 64.0g glycerol/MSA from Step 4a were added, and the mixture was heated up to 140°C. The reaction started when the temperature is constant under vacuum which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and oil phase are separated. From the oil phase the acid number is measured according to DIN EN 14104. | | | | | | |
|---|---|---|---|---|---|---|
| | 0 h | 0.5 h | 1.0 h | 2.0 h | 3.0 h | 4.0 h |
| mgKOH/g | 51.0 | 28.3 | 23.1 | 20.1 | 18.2 | 16.9 |

After reaction 612.2g reaction product was obtained from step 6. Further 11.24g distillate and 7.15g material in the cooling trap (mainly water) were obtained.

### 2b. Step:

### (Second) Acidic transesterification

564.3g reaction product from Step 6 and 169.3g methanol (30 wt% related to oil) was filled in a pressure reactor and heated up to 125°C and stirred. Reaction pressure was 4.9* 100 kPa. Reaction time was 4h. After 4h reactor was cooled down to <40°C.

### 3b. Step

### Phase separation

681.5g reaction product was filled in a separating funnel. Phase separation in a separating funnel is difficult as there is no visual difference in the phase (all black). Separation finish was judged by change of viscosity und measurement of conductivity.

### Analytical results:

Lower phase (glycerol/methanol/MSA phase) was 113.6g.

The conductivity of the lower phase was 3.93 mS/cm.

### Upper phase (fatty acid methyl ester) was 561.0 g.

### Analytics:

FAME: 88%
Mono-, Di and Triglycerides: 3%

The conductivity of the oil phase was 114.5 µS/cm.

MSA distribution (measured by neutralization with 0.1n KOH solution):
4% of the MSA is in the raw biodiesel phase
(Extraction with water from 30g raw biodiesel - 1.76ml 0.1n KOH solution needed)
96% is in the Glycerol phase

### Experimental 2:

Molar Ratio Glycerol:FFA = 1:2.6
Appr. 1.5% MSA (as active substance based on waste oil)

### 1a. Step:

### (First) Acidic degumming and esterification

507.9g filtered waste oil, 5.1g water, and 10.9g Lutropur MSA (methane sulfonic acid, 70% active content) were mixed in a reaction vessel, heated up to 100°C and stirred for 2 h. Then 36.2g glycerol were added, and the mixture was heated up to 140°C. The reaction started when the temperature is constant under vacuum which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and oil phase are separated. From the oil phase the acid number is measured according to DIN EN 14104. | | | | | | |
|---|---|---|---|---|---|---|
| | 0 h | 0.5 h | 1.0 h | 2.0 h | 3.0 h | 4.0 h |
| mgKOH/g | 93.4 | 38.9 | 30.9 | 19.3 | 16.5 | 15.9 |

After reaction 504.64g reaction product was obtained from step 2. Further 9.03g distillate and 5.38g material in the cooling trap (mainly water) were obtained.

### 2a. Step:

### (First) Acidic transesterification

456.39g reaction product from a) and 136.9.g methanol (30 wt% related to oil) was filled in a pressure reactor and heated up to 127°C and stirred. Reaction pressure was 5* 100 kPa. Reaction time was 4h. After 4h reactor was cooled down to <40°C.

### 3a. Step

### Phase separation

511.37g reaction product was filled in a separating funnel. Phase separation in a separating funnel is difficult as there is no visual difference in the phase (all black). Separation finish was judged by change of viscosity und measurement of conductivity.

### Analytical results:

Lower phase (glycerol/methanol/MSA phase) was 64.7g.

### Analytics:

FAME: 92%
Mono-, Di and Triglycerides: 3%

The conductivity of the lower phase was 5.57 mS/cm.

### Upper phase (fatty acid methyl ester) was 440.7 g

The conductivity of the oil phase was 141.2 µS/cm.

### 4a. Step

### Distillation

40.83 g lower phase (product temperature MeOH 65°C), Distillation at approx. 3 hPa and temperature of approx. 130°C.

6.42g primary low boiling product (MeOH) was separated.

32.9g higher boiling point product (Glycerol/MSA) was separated.

### Re-use of MSA/Glycerol

### 1b. Step

### (Second) Acidic degumming and esterification

421.04g filtered waste oil and 4.22g water were mixed in a reaction vessel, heated up to 100°C and stirred for 2 h. Then 31.05g glycerol/MSA from Step 4a were added, and the mixture was heated up to 140°C. The reaction started when the temperature is constant under vacuum which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and oil phase are separated. From the oil phase the acid number is measured according to DIN EN 14104. | | | | | | |
|---|---|---|---|---|---|---|
| | 0 h | 0.5 h | 1.0 h | 2.0 h | 3.0 h | 4.0 h |
| mgKOH/g | 80.8 | 36.6 | 25.3 | 18 | 14.6 | 11.3 |

After reaction 414.53g reaction product was obtained from step 6. Further 3.82g distillate and 6.1g material in the cooling trap (mainly water) were obtained.

### 2b. Step:

### (Second) Acidic transesterification

393.14g reaction product from Step 6 and 117.94g methanol (30 wt% related to oil) was filled in a pressure reactor and heated up to 125°C and stirred. Reaction pressure was 4.4* 100 kPa. Reaction time was 4h. After 4h reactor was cooled down to <40°C.

### 3b. Step

### Phase separation

450.1 g reaction product was filled in a separating funnel. Phase separation in a separating funnel is difficult as there is no visual difference in the phase (all black). Separation finish was judged by change of viscosity und measurement of conductivity.

### Analytical results:

Lower phase (glycerol/methanol/MSA phase) was 71.9g.

The conductivity of the lower phase was 3.25 mS/cm.

### Upper phase (fatty acid methyl ester) was 371.92 g.

### Analytics:

FAME: 91%
Mono-, Di and Triglycerides: 2%

The conductivity of the oil phase was 100.7 µS/cm.

The upper phase fatty acid methylester was distilled at 250°C at 8 kPa without neutralistion:
S- content: 56ppm
P- content: <1ppm

The upper phase fatty acid methylester was distilled at 250°C at 8 kPa neutralized with 0.24ml 10%NaOH/100g ester):
S- content: 10ppm
P- content: <1ppm

This shows that neutralization before distillation is needed.

MSA distribution (measured by neutralization with 0.1n KOH solution):
4% of the MSA is in the raw biodiesel phase
(Extraction with water from 30g raw biodiesel - 1.74ml 0.1n KOH solution needed)
96% is in the Glycerol phase

### 4.b. Distillation

69.03 g lower phase (product temperature MeOH 65°C), Distillation at approx. 3 hPa and temperature of approx. 130°C.

29.85g primary low boiling product (MeOH) was separated.

36.5g higher boiling point product (Glycerol/MSA) was separated.

### Second Re-use of MSA/Glycerol

### 1c. Step

### (Third) Acidic degumming and esterification

406.8g filtered waste oil and 4.07g water were mixed in a reaction vessel, heated up to 100°C and stirred for 2 h. Then 30.33g glycerol/MSA from Step 4b were added and 0.71g Lutropur MSA (methane sulfonic acid, 70% active content) to balance out the loss from the former two esterification/transesterification steps. The mixture was heated up to 140°C. The reaction started when the temperature is constant under vacuum which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and oil phase are separated. From the oil phase the acid number is measured according to DIN EN 14104. | | | | | | |
|---|---|---|---|---|---|---|
| | 0 h | 0.5 h | 1.0 h | 2.0 h | 3.0 h | 4.0 h |
| mgKOH/g | 92.9 | 60.1 | 46.6 | 45.2 | 27.1 | 22.0 |

After reaction 395.64g reaction product was obtained from step 1c. Further 10g distillate and 1.8g material in the cooling trap (mainly water) were obtained.

### 2c. Step:

### (Second) Acidic transesterification

378.8g reaction product from Step 2a and 113.65g methanol (30 wt% related to oil) was filled in a pressure reactor and heated up to 120°C and stirred. Reaction pressure was 4.1* 100 kPa. Reaction time was 4h. After 4h reactor was cooled down to <40°C.

### 3c. Step

### Phase separation

428.7g reaction product was filled in a separating funnel. Phase separation in a separating funnel is difficult as there is no visual difference in the phase (all black). Separation finish was judged by viscosity change which gave a clear indication that the phase separation was very good.

### Analytical results:

Lower phase (glycerol/methanol/MSA phase) was 53.6g.

Upper phase (fatty acid methyl ester) was 372.92 g.

### 4.c. Distillation

52.7g lower phase (product temperature MeOH 65°C), Distillation at approx. 3 hPa and temperature of approx. 130°C.

25.5g primary low boiling product (MeOH) was separated.

24.1g higher boiling point product (Glycerol/MSA) was separated.

### Third Re-use of MSA/Glycerol

### 1d. Step

### (Fourth) Acidic degumming and esterification

286.8g filtered waste oil and 2.9g water were mixed in a reaction vessel, heated up to 100°C and stirred for 2 h. Then 21.32g glycerol/MSA from Step 4c were added and 0.2g Lutropur MSA (methane sulfonic acid, 70% active content) to balance out the loss from the former esterification/transesterification steps. The mixture was heated up to 140°C. The reaction started when the temperature is constant under vacuum which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and oil phase are separated. From the oil phase the acid number is measured according to DIN EN 14104. | | | | |
|---|---|---|---|---|
| | 0 h | 1.0 h | 2.0 h | 3.0 h |
| mgKOH/g | 90.8 | 85.0 | 77.1 | 61.7 |

Upper phase (fatty acid methyl ester) was 259.3 g.

### Experimental 3:

Molar Ratio Glycerol:FFA = 1:2.7
Appr. 1.0% MSA (as active substance based on waste oil)

### 1a. Step:

### (First) Acidic degumming and esterification

521.06g filtered waste oil, 5.21g water, and 7.82g Lutropur MSA (methane sulfonic acid, 70% active content) were mixed in a reaction vessel, heated up to 100°C and stirred for 2 h. Then 37.14g glycerol were added, and the mixture was heated up to 140°C. The reaction started when the temperature is constant under vacuum, which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and | | | | | | |
|---|---|---|---|---|---|---|
| oil phase are separated. From the oil phase the acid number is measured according to DIN EN 14104. | | | | | | |
| | 0 h | 0.5 h | 1.0 h | 2.0 h | 3.0 h | 4.0 h |
| mgKOH/g | 89.9 | 32.6 | 26.8 | 26.9 | 17.6 | 14.6 |

After reaction 517.98g reaction product was obtained from step 2. Further 9.61g distillate and 4.09g material in the cooling trap (mainly water) were obtained.

### 2a. Step:

### (First) Acidic transesterification

477.2g reaction product from a) and 143.22g methanol (30 wt% related to oil) was filled in a pressure reactor and heated up to 127°C and stirred. Reaction pressure was 5* 100 kPa. Reaction time was 4h. After 4h reactor was cooled down to <40°C.

### 3a. Step

### Phase separation

551.43g reaction product was filled in a separating funnel. Phase separation in a separating funnel is difficult as there is no visual difference in the phase (all black). Separation finish was judged by change of viscosity und measurement of conductivity.

### Analytical results:

Lower phase (glycerol/methanol/MSA phase) was 90.08g.

The conductivity of the lower phase was 4.56 mS/cm.

### Upper phase (fatty acid methyl ester) was 457.93 g.

### Analytics:

FAME: 91%
Mono-, Di and Triglycerides: 3%

The conductivity of the oil phase was 75.3 µS/cm.

### 4a. Step

### Distillation

87.26 g lower phase (product temperature MeOH 65°C), Distillation at approx. 3 hPa and temperature of approx. 130°C.

28.21g primary low boiling product (MeOH) was separated.

56.01g higher boiling point product (Glycerol/MSA) was separated.

### Re-use of MSA/Glycerol

### 1b. Step

### (Second) Acidic degumming and esterification

523.22g filtered waste oil and 5.24g water were mixed in a reaction vessel, heated up to 100°C and stirred for 2 h. Then 39.52g glycerol/MSA from Step 5 were added, and the mixture was heated up to 140°C. The reaction started when the temperature is constant under vacuum which was kept constant at 10 kPa. Reaction time was 4 h.

### Analytical result:

**Table 1: Time dependency of Acid number in mgKOH/g**

| The esterification of free fatty acid with glycerol was controlled by taking out samples (approx. 4 g). The sample is washed with ca. 4g glycerol to eliminate MSA from the mixture. Glycerol and oil phase are separated. From the oil phase the acid number is measured according to DIN EN 14104. | | | | | | |
|---|---|---|---|---|---|---|
| | 0 h | 0.5 h | 1.0 h | 2.0 h | 3.0 h | 4.0 h |
| mgKOH/g | 79.3 | 59.7 | 39 | 27.3 | 24.2 | 19.5 |

After reaction 546g reaction product was obtained from step 6. Further 2.5g distillate and 5.1g material in the cooling trap (mainly water) were obtained.

### 2b. Step:

### (Second) Acidic transesterification

479.53g reaction product from Step 6 and 143.86g methanol (30 wt% related to oil) was filled in a pressure reactor and heated up to 125°C and stirred. Reaction pressure was 4.3* 100 kPa. Reaction time was 4h. After 4h reactor was cooled down to <40°C.

### 3b. Step

### Phase separation

558.20g reaction product was filled in a separating funnel. Phase separation in a separating funnel is difficult as there is no visual difference in the phase (all black). Separation finish was judged by change of viscosity und measurement of conductivity.

### Analytical results:

Lower phase (glycerol/methanol/MSA phase) was 86.07g.

The conductivity of the lower phase was 3.99 mS/cm.

### Upper phase (fatty acid methyl ester) was 469.89 g.

### Analytics:

FAME: 84%
Mono-, Di and Triglycerides: 9%

The conductivity of the oil phase was 67.2 µS/cm.

MSA distribution (measured by neutralization with 0.1n KOH solution):
4% of the MSA is in the raw biodiesel phase
(Extraction with water from 30g raw biodiesel - 1.2ml 0.1n KOH solution needed)
96% is in the Glycerol phase

## Claims

1. A method of producing fatty acid alkyl ester from an organic oil source containing at least one free fatty acid, wherein the vegetable and/or animal waste oil has an acid number of at least 30 mg KOH/g and wherein the method comprises the steps of
a) reacting the oil source with glycerol at a temperature, which is at least 110°C and does not exceed 180°C during the reaction, in the presence of a catalyst comprising at least methane sulfonic acid or the homo anhydride thereof; and
b) acidic transesterification at a temperature, which is at least 110°C and does not exceed 160°C during the reaction of the reaction product from step a) with an alkanol, wherein the reaction product from step a) comprises the at least one free fatty acid reacted with glycerol, glycerol and the catalyst; and
c) isolating the fatty acid alkyl ester from the reaction product from step b), wherein the reaction product from step b) comprises the fatty acid alkyl ester, glycerol, the catalyst and the alkanol.
d) isolating a mixture of glycerol and catalyst from the reaction product after step c);
e) repeating steps a) to c) provided that at least part of the glycerol and the catalyst used in step a) results from the mixture of step d).

2. The method of claim 1, wherein the fatty acid alkyl ester is fatty acid methyl ester.

3. The method of claim 1 or 2, wherein the organic oil source is from used vegetable and/or animal oil and/or fat, by-products of the chemical and physical refining of vegetable and/or animal oil and/or fat, by-products of the refining of glycerol from biodiesel, fatty acids from distillation and non-distillation, trap grease, hydrolytically cleaved fatty substances and distilled and non-distilled fatty acids resulting from the cleaving of soap or mixtures thereof.

4. The method of any of claims 1 to 3, wherein the organic oil source has an acid number of at least 40 mg KOH/g oil source, preferably at least 60 mg KOH/g oil source, more preferably at least 80 mgKOH/g oil source, even more preferably at least 100 mg KOH/g oil source, even more preferably at least 120mgKOH/g oil source, even more preferably at least 140 mgKOH/g oil source, even more preferably at least 150 mg KOH/g oil source.

5. The method of any of claims 1 to 4, wherein in step a) the temperature is at least 120°C, more preferably at least 130°C and/or the temperature does not exceed 170°C, preferably does not exceed 160°C, more preferably does not exceed 150°C.

6. The method of any of claims 1 to 5, wherein in step b) the temperature is at least 110°C, more preferably at least 115°C and/or the temperature does not exceed 160°C, preferably does not exceed 150°C, more preferably does not exceed 140°C.

7. The method of any of claims 1 to 6, wherein in step a) the initial molar ratio of glycerol to free fatty acid calculated on the basis of the acid number of the oil is from 1:3 to 1:1.5, more preferably from 1:2.7 to 1:8.

8. The method of any of claims 1 to 7, wherein in step a), step b) or step a) and b) the amount of the methane sulfonic acid or anhydride thereof is from 0.5 to 2 weight-% based on the total amount of the oil source.

9. The method of any of claims 1 to 8, wherein in step c) the isolation includes a phase separation step, wherein a first phase is obtained comprising the fatty acid alkyl ester, wherein the first phase is preferably either neutralized or washed with water to remove the residual catalyst, and a second phase comprising glycerol, the catalyst and the alkanol.

10. The method of any of claims 1 to 9, wherein in step d) the mixture of glycerol and catalyst is isolated from the reaction product after step c) by distillation.

11. The method of any of claims 1 to 10, wherein in step d) the alkanol is at least partly recycled by distillation.

12. The method of any of claims 1 to 11, wherein step e) is followed by a further step of isolating a mixture of glycerol and catalyst from the reaction product after step c) in order to repeat step e) again.

13. The method of any of claims 1 to 12, wherein between step a) and step b) no phase separation is carried out.

14. The method of any of claims 1 to 13, wherein step a) and step b) are carried out in the same reactor vessel.

15. The method of any of claims 1 to 14, wherein after step b) and before step c) a step b') of removing at least partly the alkanol by using the reaction temperature, especially by lowering the pressure, preferably to atmospheric pressure, is introduced.

## Patentansprüche

1. Ein Verfahren zur Herstellung von Fettsäurealkylester aus einer organischen Ölquelle, die mindestens eine freie Fettsäure enthält, wobei das pflanzliche und/oder tierische Altöl eine Säurezahl von mindestens 30 mg KOH/g aufweist und wobei das Verfahren die folgenden Schritte umfasst:
a) Umsetzen der Ölquelle mit Glycerol bei einer Temperatur, die während der Reaktion mindestens 110 °C beträgt und 180 °C nicht überschreitet, in Gegenwart eines Katalysators, der mindestens Methansulfonsäure oder deren Homo-Anhydrid umfasst; und
b) saure Umesterung bei einer Temperatur, die während der Reaktion mindestens 110 °C beträgt und 160 °C nicht überschreitet, des Reaktionsprodukts aus Schritt a) mit einem Alkanol, wobei das Reaktionsprodukt aus Schritt a) die mindestens eine mit Glycerol umgesetzte freie Fettsäure, Glycerol und den Katalysator umfasst; und
c) Isolieren des Fettsäurealkylesters aus dem Reaktionsprodukt aus Schritt b), wobei das Reaktionsprodukt aus Schritt b) den Fettsäurealkylester, Glycerol, den Katalysator und das Alkanol umfasst.
d) Isolieren eines Gemisches aus Glycerol und Katalysator aus dem Reaktionsprodukt nach Schritt c);
e) Wiederholen der Schritte a) bis c), vorausgesetzt, dass mindestens ein Teil des in Schritt a) verwendeten Glycerols und des Katalysators aus dem Gemisch aus Schritt d) stammt.

2. Das Verfahren nach Anspruch 1, wobei der Fettsäurealkylester Fettsäuremethylester ist.

3. Das Verfahren nach Anspruch 1 oder 2, wobei die organische Ölquelle aus gebrauchtem pflanzlichem und/oder tierischem Öl und/oder Fett, Nebenprodukten der chemischen und physikalischen Raffination von pflanzlichem und/oder tierischem Öl und/oder Fett, Nebenprodukten der Raffination von Glycerol aus Biodiesel, Fettsäuren aus Destillation und Nicht-Destillation, Fettabscheider-Fett, hydrolytisch gespaltenen Fettsubstanzen und destillierten und nicht destillierten Fettsäuren aus der Spaltung von Seife oder Gemischen davon stammt.

4. Das Verfahren nach einem der Ansprüche 1 bis 3, wobei die organische Ölquelle eine Säurezahl von mindestens 40 mg KOH/g Ölquelle, vorzugsweise mindestens 60 mg KOH/g Ölquelle, bevorzugter mindestens 80 mg KOH/g Ölquelle, noch bevorzugter mindestens 100 mg KOH/g Ölquelle, noch bevorzugter mindestens 120 mg KOH/g Ölquelle, noch bevorzugter mindestens 140 mg KOH/g Ölquelle, noch bevorzugter mindestens 150 mg KOH/g Ölquelle aufweist.

5. Das Verfahren nach einem der Ansprüche 1 bis 4, wobei in Schritt a) die Temperatur mindestens 120 °C beträgt, bevorzugter mindestens 130 °C und/oder die Temperatur 170 °C nicht überschreitet, vorzugsweise 160 °C nicht überschreitet, bevorzugter 150 °C nicht überschreitet.

6. Das Verfahren nach einem der Ansprüche 1 bis 5, wobei in Schritt b) die Temperatur mindestens 110 °C beträgt, bevorzugter mindestens 115 °C und/oder die Temperatur 160 °C nicht überschreitet, vorzugsweise 160 °C nicht überschreitet, bevorzugter 150 °C nicht überschreitet, noch bevorzugter 140 °C nicht überschreitet.

7. Das Verfahren nach einem der Ansprüche 1 bis 6, wobei in Schritt a) das anfängliche Molverhältnis von Glycerol zu freier Fettsäure, berechnet auf Basis der Säurezahl des Öls, von 1:3 bis 1:1,5, bevorzugter von 1:2,7 bis 1:8 beträgt.

8. Das Verfahren nach einem der Ansprüche 1 bis 7, wobei in Schritt a), Schritt b) oder Schritt a) und b) die Menge der Methansulfonsäure oder deren Anhydrid 0,5 bis 2 Gew.-% bezogen auf die Gesamtmenge der Ölquelle beträgt.

9. Das Verfahren nach einem der Ansprüche 1 bis 8, wobei in Schritt c) die Isolierung einen Phasentrennungsschritt umfasst, bei dem eine erste Phase erhalten wird, die den Fettsäurealkylester enthält, wobei die erste Phase vorzugsweise entweder neutralisiert oder mit Wasser gewaschen wird, um den Restkatalysator zu entfernen, und eine zweite Phase, die Glycerol, den Katalysator und das Alkanol enthält.

10. Das Verfahren nach einem der Ansprüche 1 bis 9, wobei in Schritt d) das Gemisch aus Glycerol und Katalysator aus dem Reaktionsprodukt nach Schritt c) durch Destillation isoliert wird.

11. Das Verfahren nach einem der Ansprüche 1 bis 10, wobei in Schritt d) das Alkanol zumindest teilweise durch Destillation zurückgewonnen wird.

12. Das Verfahren nach einem der Ansprüche 1 bis 11, wobei auf Schritt e) ein weiterer Schritt zur Isolierung eines Gemisches aus Glycerol und Katalysator aus dem Reaktionsprodukt nach Schritt c) folgt, um Schritt e) erneut zu wiederholen.

13. Das Verfahren nach einem der Ansprüche 1 bis 12, wobei zwischen Schritt a) und Schritt b) keine Phasentrennung durchgeführt wird.

14. Das Verfahren nach einem der Ansprüche 1 bis 13, wobei Schritt a) und Schritt b) im selben Reaktionsbehälter durchgeführt werden.

15. Das Verfahren nach einem der Ansprüche 1 bis 14, wobei nach Schritt b) und vor Schritt c) ein Schritt b') eingeführt wird, bei dem das Alkanol zumindest teilweise unter Verwendung der Reaktionstemperatur, insbesondere durch Verringerung des Drucks, vorzugsweise auf Atmosphärendruck, entfernt wird.

## Revendications

1. Un procédé de production d'ester alkylique d'acide gras à partir d'une source d'huile organique contenant au moins un acide gras libre, dans lequel l'huile usagée végétale et/ou animale présente un indice d'acide de au moins 30 mg KOH/g et dans lequel le procédé comprend les étapes de
a) faire réagir la source d'huile avec du glycérol à une température qui est d'au moins 110°C et ne dépasse pas 180°C pendant la réaction, en présence d'un catalyseur comprenant au moins de l'acide méthane sulfonique ou son homo anhydride ; et
b) transestérification acide à une température qui est d'au moins 110°C et ne dépasse pas 160°C pendant la réaction du produit réactionnel de l'étape a) avec un alcanol, dans lequel le produit réactionnel de l'étape a) comprend le au moins un acide gras libre ayant réagi avec le glycérol, le glycérol et le catalyseur ; et
c) isoler l'ester alkylique d'acide gras du produit réactionnel de l'étape b), dans lequel le produit réactionnel de l'étape b) comprend l'ester alkylique d'acide gras, le glycérol, le catalyseur et l'alcanol.
d) isoler un mélange de glycérol et de catalyseur du produit réactionnel après l'étape c) ;
e) répéter les étapes a) à c) à condition qu'au moins une partie du glycérol et du catalyseur utilisés à l'étape a) provienne du mélange de l'étape d).

2. Le procédé selon la revendication 1, dans lequel l'ester alkylique d'acide gras est un ester méthylique d'acide gras.

3. Le procédé selon la revendication 1 ou 2, dans lequel la source d'huile organique provient d'huile et/ou de graisse végétale et/ou animale usagée, de sous-produits du raffinage chimique et physique d'huile et/ou de graisse végétale et/ou animale, de sous-produits du raffinage du glycérol issu du biodiesel, d'acides gras provenant de la distillation et de la non-distillation, de graisses de piège, de substances grasses clivées par hydrolyse et d'acides gras distillés et non distillés résultant du clivage du savon ou de leurs mélanges.

4. Le procédé selon l'une quelconque des revendications 1 à 3, dans lequel la source d'huile organique présente un indice d'acide d'au moins 40 mg KOH/g de source d'huile, de préférence d'au moins 60 mg KOH/g de source d'huile, plus préférablement d'au moins 80 mg KOH/g de source d'huile, encore plus préférablement d'au moins 100 mg KOH/g de source d'huile, encore plus préférablement d'au moins 120 mg KOH/g de source d'huile, encore plus préférablement d'au moins 140 mg KOH/g de source d'huile, encore plus préférablement d'au moins 150 mg KOH/g de source d'huile.

5. Le procédé selon l'une quelconque des revendications 1 à 4, dans lequel à l'étape a) la température est d'au moins 120°C, plus préférablement d'au moins 130°C et/ou la température ne dépasse pas 170°C, de préférence ne dépasse pas 160°C, plus préférablement ne dépasse pas 150°C.

6. Le procédé selon l'une quelconque des revendications 1 à 5, dans lequel à l'étape b) la température est d'au moins 110°C, plus préférablement d'au moins 115°C et/ou la température ne dépasse pas 160°C, de preference ne dépasse pas 150°C, plus préférablement ne dépasse pas 140°C.

7. Le procédé selon l'une quelconque des revendications 1 à 6, dans lequel à l'étape a) le rapport molaire initial du glycérol à l'acide gras libre calculé sur la base de l'indice d'acide de l'huile est de 1:3 à 1:1,5, plus préférablement de 1:2,7 à 1:8.

8. Le procédé selon l'une quelconque des revendications 1 à 7, dans lequel à l'étape a), à l'étape b) ou aux étapes a) et b), la quantité d'acide méthane sulfonique ou de son anhydride est de 0,5 à 2 % en poids par rapport à la quantité totale de la source d'huile.

9. Le procédé selon l'une quelconque des revendications 1 à 8, dans lequel à l'étape c) l'isolation comprend une étape de séparation de phases, dans laquelle une première phase est obtenue comprenant l'ester alkylique d'acide gras, dans lequel la première phase est de préférence soit neutralisée soit lavée à l'eau pour éliminer le catalyseur résiduel, et une deuxième phase comprenant le glycérol, le catalyseur et l'alcanol.

10. Le procédé selon l'une quelconque des revendications 1 à 9, dans lequel à l'étape d) le mélange de glycérol et de catalyseur est isolé du produit réactionnel après l'étape c) par distillation.

11. Le procédé selon l'une quelconque des revendications 1 à 10, dans lequel à l'étape d) l'alcanol est au moins partiellement recyclé par distillation.

12. Le procédé selon l'une quelconque des revendications 1 à 11, dans lequel l'étape e) est suivie d'une étape supplémentaire d'isolation d'un mélange de glycérol et de catalyseur du produit réactionnel après l'étape c) afin de répéter à nouveau l'étape e).

13. Le procédé selon l'une quelconque des revendications 1 à 12, dans lequel entre l'étape a) et l'étape b) aucune séparation de phases n'est effectuée.

14. Le procédé selon l'une quelconque des revendications 1 à 13, dans lequel l'étape a) et l'étape b) sont réalisées dans le même réacteur.

15. Le procédé selon l'une quelconque des revendications 1 à 14, dans lequel après l'étape b) et avant l'étape c) une étape b') d'élimination au moins partielle de l'alcanol en utilisant la température de réaction, notamment en abaissant la pression, de préférence à la pression atmosphérique, est introduite.
